# EUROPEAN PATENT APPLICATION

(11) **EP 4 722 694 A1**
(43) Date of publication of application: **08.04.2026**
(21) Application number: 24814844.7
(22) Date of filing: 23.01.2024
(51) Int. Cl.: G01N 21/47, G01N 21/3577

(54) **SPECTROSCOPIC MEASUREMENT DEVICE AND ADJUSTMENT METHOD THEREFOR**

(30) Priority: 02.06.2023 JP 2023091350
(71) Applicant: HITACHI HIGH-TECH CORPORATION, Tokyo 105-6409 (JP)
(72) Inventor: YAMAKAWA, Ichiro, Tokyo 100-8280 (JP); KAGA, Yusuke, Tokyo 100-8280 (JP); NOJIMA, Akihiro, Tokyo 100-8280 (JP); HORIGOME, Jun, Tokyo 105-6409 (JP); MARUYAMA, Kai, Tokyo 105-6409 (JP)
(74) Representative: MERH-IP Matias Erny Reichl Hoffmann Patentanwälte PartG mbB
(86) International application number: PCT/JP2024/001759
(87) International publication number: WO 2024/247357

(57) **Abstract**

To provide: a device which performs spectroscopic measurement on a suspension liquid handled in the field of pharmaceutical products, foods, or chemistry without taking out the suspension liquid from the inside of a pipe, and is capable of accurate measurement even when the device is attached to pipes of various shapes and materials; and a measurement condition adjustment method, the following configuration is adopted. A measurement device for measuring an optical spectrum of a liquid flowing in a pipe provided with a window material includes: a measurement probe having a light irradiation unit and a light reception unit; and a movement mechanism for moving the measurement probe, in which the movement direction of the measurement probe includes a rotation angle for changing the direction of the probe and a direction different from the axial direction of the pipe. The position of the measurement probe is adjusted by using both or one of the S/N ratio and the intensity of the measured values at the wavelength of interest.

## Description

### Technical Field

The present invention relates to a spectroscopic measurement device for spectroscopically measuring a component in a suspension liquid or an emulsion liquid and an adjustment method therefor and in particular to a spectroscopic measurement device suitable for making a spectroscopic measurement with accuracy and an optical system adjustment method therefor.

Suspension liquid generally refers to a liquid in which solid particles are dispersed. Meanwhile, emulsion liquid generally refers to a liquid in which liquid particles produced by emulsifying effect or the like are dispersed. In the present specification, the terms of suspension liquid and emulsion liquid are not especially discriminated from each other and the liquids will be referred to as suspension liquid.

### Background Art

A technique of spectroscopically measuring a component in a liquid enables a measurement target to be measured non-invasively and without sampling; therefore, the technique enables a continuous measurement without converting a measurement target and thus there is a need for application in the fields of pharmaceutical products, foods, and chemistry.

In these fields, for example, in the field of pharmaceutical products, further, a need for measuring a suspension liquid obtained by cell culture has been intensified, and in the field of foods, a need for measuring such a suspension liquid as brewed products and dairy products has also been intensified.

As a method for spectroscopically measuring a component in a liquid, for example, a method in which light is guided into a liquid and the resulting transmitted light is spectroscopically measured is known as described in Patent Literature 1. In this method, a component concentration in the liquid is computed based on an absorption amount of light of a specific wavelength.

When a liquid is transparent, a spectroscopic measurement of transmitted light can be used in the above-mentioned method. Meanwhile, when a component is suspended in a liquid, light is dispersed by the suspending component, the intensity of the transmitted light is weakened; as a result, the transmitted light may become difficult to measure or a component concentration in the liquid may be difficult to be computed.

In Patent Literature 1, the above-problem is solved by diffuse reflected light measurement in which light dispersed in a suspension liquid is measured in the direction on the same side as incident light.

Patent Literature 2 discloses a method in which a measurement is performed without immersing a measurement portion (measurement probe) into a liquid. In this method, diffuse reflected light of a liquid in a container can be measured by attaching a probe to a transparent window material portion of the container filled with the liquid as a measurement target. In this method, since the probe is not immersed into a liquid, measurement is not influenced by adhesion of the suspension liquid to the probe.

In Patent Literature 2, further, irradiation light reflected by the window material is prevented from being measured again by the probe by forming an angle between the window material of the probe and the axis of an optical fiber.

### Citation List

### Patent Literature

Patent Literature 1: Japanese Unexamined Patent Application Publication No. 2000-9638
Patent Literature 2: Japanese Unexamined Patent Application Publication No. Hei 9-89657

### Summary of Invention

### Technical Problem

According to the method described in Patent Literature 1, with respect to a suspension liquid, diffuse reflected light can be measured but a measurement portion is immersed into a liquid as a measurement target and the measurement portion is complicatedly structured; therefore, the suspension liquid adheres to and contaminates the measurement portion and this may make measurement difficult.

When the present inventor et al. reviewed the method described in Patent Literature 2 in details, it was found that: to perform spectroscopic measurement with accuracy, aside from the influence of irradiation light reflected at the surface of a window material, reflected light at the surface on the side where the window material and a liquid are in contact with each other and light absorption by the window material caused according to a distance during transmission through the window material must also be taken into account.

A reflectance of a surface on the side where a window material and a liquid are in contact with each other is caused by a difference in refractive index between a material of the window material and the liquid. Light absorption during transmission of light through a window material varies according to a structure, such as thickness and curvature, of the window material and angles at which light enters or is received.

Meanwhile, in production lines in various fields, pipes of various shapes and materials are used. When a probe structure is designed and manufactured in advance with respect to these pipes of various shapes and materials, there used to be fear that a duration and a cost are increased.

Suspension liquids are different in the directional distribution of light scattering according to a size of particles in a liquid; even in cases where pipes of an identical shape and an identical material are used, when a type of a suspension liquid is changed, an optimal optical condition varies and a probe structure must be altered.

It is an object of the present invention to provide a spectroscopic measurement device and an optical system adjustment method therefor that are applicable even to production lines in various fields in which pipes of various shapes and various materials are used.

Further, it is an object of the present invention to provide a spectroscopic measurement device and an optical adjustment method therefor that are applicable even when a size of particles of a suspended matter in a suspension liquid or a type of the suspension liquid varies.

### Solution to Problem

A configuration of the present invention to solve the above problem is as described below:

A spectroscopic measurement device, when used, attached to a pipe having a window portion that allows a suspension liquid to be optically checked; the spectroscopic measurement device including: a light irradiation unit that applies light to a suspension liquid in the pipe through the window portion and a light reception portion for receiving light emitted from the suspension liquid as the result of application of light from the light irradiation unit to the suspension liquid; and the spectroscopic measurement device including a variable mechanism capable of varying at least either of an angle of light applied from the light irradiation unit to the window portion and an irradiation position. And an adjustment method for the spectroscopic measurement device.

### Advantageous Effects of Invention

According to the present invention, a spectroscopic measurement device and an optical system adjustment method that are applicable even to production lines in various fields in which pipes of various shapes and various materials are used can be provided.

Further, a spectroscopic measurement device and an optical adjustment method that are applicable even when a size of particles of a suspended matter in a suspension liquid or a type of the suspension liquid varies.

### Brief Description of Drawings

FIG. 1A is a sectional view taken perpendicularly to the longitudinal direction of a pipe of a spectroscopic measurement device according to an embodiment of the present invention.
FIG. 1B is a drawing of a spectroscopic measurement device according to an embodiment of the present invention as viewed in the direction along the longitudinal direction of a pipe thereof.
FIG. 2 is a drawing showing a result of measurement performed when an optical system adjustment is made using a spectroscopic measurement device.
FIG. 3 is a drawing showing a result of measurement performed when an optical system adjustment is made using a spectroscopic measurement device.
FIG. 4 is a drawing showing a result of measurement performed when an optical system adjustment is made using a spectroscopic measurement device.
FIG. 5 is a drawing showing a result of measurement performed when an optical system adjustment is made using a spectroscopic measurement device.
FIG. 6 is a flowchart showing an example of optical system adjustment.
FIG. 7 is a flowchart showing an example of optical system adjustment.
FIG. 8A is a conceptual diagram showing a quantification method by a calibration curve (a result of measurement by a conventional technology).
FIG. 8B is a conceptual diagram showing a quantification method by a calibration curve (a result of measurement by a technology of the present invention). Description of Embodiments

Hereafter, a description will be given to embodiments of the present invention with reference to the drawings and the like. The following description shows a concrete example of the contents of the present invention; the present invention is not limited to the description and can be variously modified or amended by a person skilled in the art without departing from the scope of the technical idea disclosed in the present specification. In all the drawings illustrating the present invention, items having an identical function will be marked with an identical reference sign and a repetitive description thereof may be omitted sometimes.

### First Embodiment

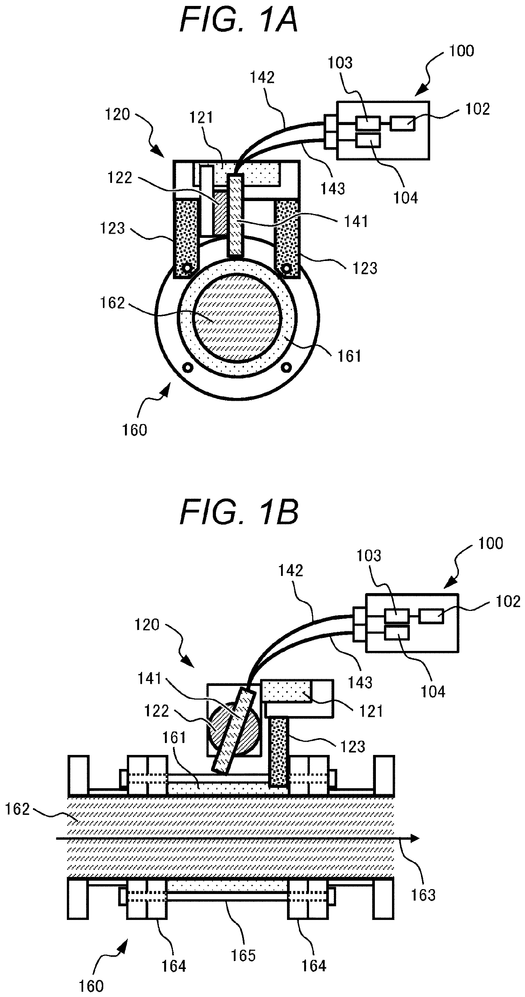

FIG. 1A and FIG. 1B are conceptual diagrams illustrating an example of a spectroscopic measurement device as is attached to a pipe having a window material. FIG. 1A is a sectional view taken perpendicularly to the longitudinal direction of the pipe and FIG. 1B is a drawing as viewed along the longitudinal direction. Hereafter, FIG. 1A and FIG. 1B will be collectively referred to as FIG. 1.

In FIG. 1, the spectroscopic measurement device includes a spectroscopic device 100, a probe jig 120, a measurement probe 141, an irradiation optical fiber 142, and a reception optical fiber 143 and is attached to a pipe 160.

The spectroscopic device 100 is a double beam type spectrophotometer including a light source 102, a spectrometer 103, and a detector 104 and the irradiation optical fiber 142 and the reception optical fiber 143 are connected thereto.

Light emitted from the light source 102 is monochromatized by the spectrometer 103 and guided into the irradiation optical fiber 142. The light from the irradiation optical fiber 142 is applied to a suspension liquid 162 in the pipe through a window material 161 and part of diffuse reflected light from the suspension liquid 162 enters the reception optical fiber 143 again through the window material 161. Aside from diffuse reflected light from the suspension liquid 162, light entering the reception optical fiber 143 also includes light from the irradiation optical fiber 142, reflected or scattered at the surface of the window material. Reflection and scattering at the surface of the window material, cited here, occur both on the outer surface side (side where the measurement probe approaches) and on the inner surface side (side where the suspension liquid is in contact).

When light from the irradiation optical fiber 142 and light entering the reception optical fiber 143 pass through the interior of the window material 161, the light is attenuated by light absorption of the window material.

Light that entered the reception optical fiber 143 is detected as measured light by the detector 104.

Though not shown, with respect to light outputted from the spectrometer 103, an optical path is provided for detecting light, so-called reference light, entering the detector 104 without passing through the irradiation optical fiber 142 and the reception optical fiber 143.

The light source 102 is preferably a white light source having a continuous spectrum. An incandescent light bulb, a halogen lamp, a Xenon lamp, a white light emitting diode, a wavelength tunable laser, or the like is available but any other light source is also acceptable as long as the light source can emit light of a plurality of wavelengths.

The spectrometer 103 is preferably a spectrometer using a diffraction grating but a spectrometer using a prism and a spectrometer using an optical filter are also acceptable.

The detector 104 is preferably a photomultiplier tube or a photoconductive element, such as PbS or CdS, but such a photodetector as a photodiode, a PIN diode, or a pyrometer is also acceptable.

The spectroscopic device 100 is capable of outputting, as a measured value, light energy measured at the detector 104, a reflectance which is a ratio of light energy measured with respect to the above-mentioned measured light and reference light, and an absorbance which is a common logarithm value of the reciprocal of a reflectance.

The irradiation optical fiber 142 and the reception optical fiber 143 are bundled by the measurement probe 141 attached to the other end side of the spectroscopic device 100.

The probe jig 120 includes a linear motion mechanism 121, a rotational motion mechanism 122, and a fixing portion 123 and the measurement probe 141 is fixed to the rotational motion mechanism 122 and is fixed to the pipe 160 by the fixing portion 123.

For the linear motion mechanism 121, a linear stage can be used.

The linear motion mechanism 121 is preferably so installed that the movement direction thereof is substantially orthogonal to an axial direction 163 of the pipe 160.

For the rotational motion mechanism 122, a rotational stage can be used.

The direction of the rotational axis of the rotational motion mechanism 122 preferably substantially agrees with the movement direction of the linear stage.

For a guide structure for the linear motion mechanism 121 and the rotational motion mechanism 122, for example, a dovetail groove method, a ball guide method, or a cross-roller guide method can be used as appropriate.

For a movement method for the linear motion mechanism 121 and the rotational motion mechanism 122, a manual method or an electric method using a rotating motor or a linear motor can be used as appropriate.

For a material of the probe jig 120 and the fixing portion 123, for example, metal or a resin material can be used as appropriate.

However, when the suspension liquid 162 is at high temperature, heat is transmitted through the pipe 160 and a resin material may be deformed; therefore, metal is preferable and stainless steel, iron, or aluminum is most favorable.

The pipe 160 includes the cylindrical window material 161, a flange 164, and a fixing rod 165 and the suspension liquid 162 flows therein.

The window material 161 is sandwiched between flanges 164 on both sides. The flanges 164 on both sides are fixed by the four fixing rods 165 and the window material 161 is thereby fixed to the pipe 160.

For a material of the window material 161, for example, aside from glass, quartz, sapphire, and the like, a transparent resin material can be used as appropriate as long as the material has light transparency.

For a material (including the flanges 164 and the fixing rods 165) of the pipe 160 other than the window material 161, for example, metal or a resin material can be used as appropriate.

However, when the suspension liquid 162 is at high temperature or flows under high pressure, a resin material may be deformed due to high temperature; therefore, glass or reinforced glass is preferable for a material of the window material 161. For the same reason, stainless steel or such metal as iron is preferable for a material (including the flanges 164 and the fixing rods 165) of the pipe 160 other than the window material 161.

Monochromatized light guided from the spectroscopic device 100 into the irradiation optical fiber 142 is applied to the window material 161 through the measurement probe 141. Part of the light enters from the outer side surface of the window material 161 as refracted light and further part thereof enters from the inner side surface of the window material 161 into the suspension liquid 162 as refracted light.

Part of light that intruded into the suspension liquid 162 is scattered by particles and molecules in the suspension liquid 162 and thereby has a traveling direction thereof changed; part thereof intrudes from the inner side surface of the window material 161 into the window material 161 again as refracted light and further from the outer side surface of the window material 161 into the atmosphere as refracted light and part thereof enters the reception optical fiber 143 bundled by the measurement probe 141. The light that entered the reception optical fiber 143 has an intensity thereof detected by the photodetector of the spectroscopic device 100.

When light entering the reception optical fiber 143 travels in the suspension liquid 162 is subjected to light absorption by molecules and particles therein. For this reason, an influence of light absorption by a component of the suspension liquid 162 can be examined by measuring the light entering the reception optical fiber 143 with the spectroscopic device 100.

According to the above-mentioned configuration, the measurement probe 141 is connected also with the linear motion mechanism 121 through the rotational motion mechanism 122 and the linear motion mechanism 121 is further connected to the pipe 160 through the probe jig 120 main body and the fixing portions 123. For this reason, a position of the measurement probe 141 relative to the window material 161 can be changed using the linear motion mechanism 121. Further, an angle of the measurement probe 141 relative to the window material 161 can be changed using the rotational motion mechanism 122.

Since a position of the measurement probe 141 relative to the window material 161 can be adjusted, highly accurate spectrometry can be implemented by suppressing detection of irradiation light reflected and scattered at the outer side surface and inner side surface of the window material 161 and making an adjustment to a measurement condition under which attenuation of light due to light absorption of the window material is also suppressed.

In the above description of the first embodiment, a case where a double beam type wavelength dispersive spectrophotometer is used as the spectroscopic device 100 has been taken as an example but the type thereof is not limited to the foregoing and, for example, a single beam type wavelength dispersive spectrophotometer or a Fourier transform type spectrophotometer is also acceptable.

Measured values obtained by these spectrophotometers may be, aside from the above-mentioned light energy, reflectance, and absorbance, light energy, a photon number, an output voltage or an output current of the detector.

The spectroscopic device 100 need not be a spectrophotometer and, for example, a fluorescence spectrophotometer may be used. In this case, for example, fluorescence intensity can be used as a measured value.

Raman spectroscopy equipment may be used and, in this case, Raman scattering intensity can be used as a measured value.

In the above description of the embodiment, a case where the linear motion mechanism 121 and the rotational motion mechanism 122 are used as a movement mechanism included in the probe jig 120 has taken an example but any other movement mechanism than these two may be provided.

### Second Embodiment

Hereafter, a description will be given to an example of an optical system adjustment method of the present invention.

A spectroscopic measurement device used in the present embodiment is a spectroscopic measurement device in the first embodiment and an absorbance of the suspension liquid 162 flowing in the pipe 160 is measured.

For the suspension liquid 162, a liquid obtained by dispersing vegetable oil in water using emulsifier was used.

In relation to the present embodiment, a description will be given to a method for adjusting a position of the measurement probe 141, which can be adjusted by the linear motion mechanism 121, to an optimal position through measurement of reflectance.

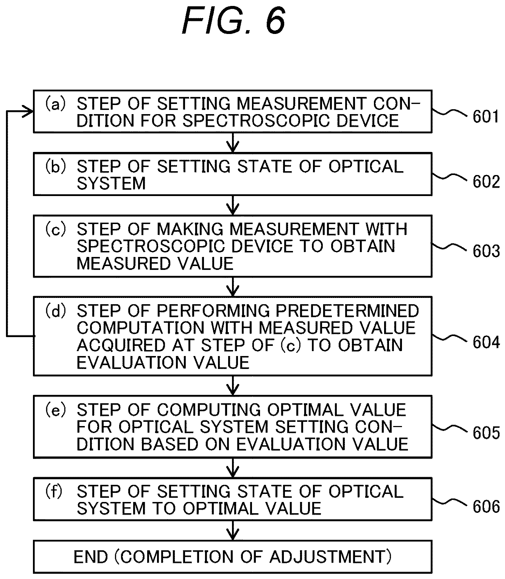

The order of execution of each step is as shown in FIG. 6 and is specifically as described below:

At the first Step (a) 601, a measurement condition for the spectroscopic device 100 is set as described below:

A measurement is made so as to measure a reflectance at intervals of 5 nm under conditions of a wavelength sweep range of 1700 nm to 1200 nm and a wavelength sweep speed of 1200 nm/min.

The reason why the above wavelength sweep range was selected is that: a light absorption band due to water in the suspension liquid is observed in proximity to a wavelength of 1460 nm and a region free from an influence of light absorption by water out of the wavelength band is also included in measurement.

To quantify any other content than water in the suspension liquid, any other wavelength range may be selected. For example, to quantify a component of vegetable oil, a wavelength range may be selected so that a light absorption band in proximity to a wavelength of 1200 nm can be measured.

At the subsequent Step (b) 602, a state of the optical system, that is, a position of the measurement probe 141 is shifted using the linear motion mechanism 121. Movement position X is set to +3.5 mm.

At the subsequent Step (c) 603, a measurement with the spectroscopic device 100 is performed under the condition set at Step (a) 601 and a reflectance with a wavelength of 1700 nm to 1200 nm is measured as a spectrum.

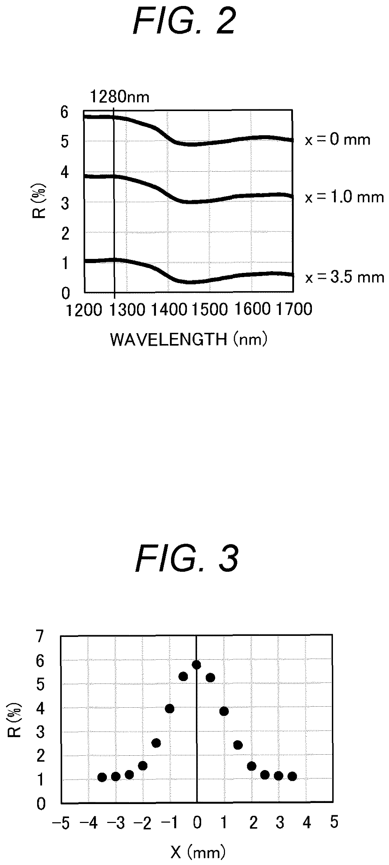

At the lower part of FIG. 2, a reflectance spectrum measured at movement position X of +3.5 mm is shown.

A spectrum shape is characterized in that a reflectance is lowered due to absorption by water in the suspension liquid flowing in the pipe in proximity to 1460 nm.

At the subsequent Step (d) 604, of the spectra obtained at Step (c) 603, a reflectance at a wavelength of 1280 nm is obtained as a part of evaluation values.

The reason why a wavelength of 1280 nm was selected is that: when a wavelength in proximity to 1460 nm at which absorption by water in the suspension liquid in the pipe occurs is selected, an influence of change in water amount in the suspension liquid in the pipe is avoided. In this example, 1280 nm is selected but any other wavelength is also acceptable as long as the wavelength is not influenced by absorption of water. For example, 1650 nm may be selected.

Subsequently, Step (a) to 601 to Step (c) 603 are repeated. At this time, a measurement condition for Step (a) 601 is set as mentioned above and the movement position X of Step (b) 602 is shifted to the negative direction by 0.5 mm each time of repetition. Until the movement position becomes -3.5 mm, Step (a) 601 to Step (c) 603 are repeated and a set of movement position X and corresponding reflectance is obtained as an evaluation value.

FIG. 2 shows a reflection spectrum measured when movement position X is 1.0 mm, 0 mm.

How a reflection spectrum varies depending on movement position X can be seen. Evaluation values at the spectrum shown in FIG. 2, that is, a set of movement position X and a reflectance at a wavelength of 1280 nm is (3.5 mm, 1.09%), (1.0 mm, 3.82%), and (0 mm, 5.77%).

At Step (e) 605, subsequently, an optimal value is computed from the evaluation values obtained by repeating Step (a) 601 to Step (c) 603. FIG. 3 shows a reflectance at a wavelength of 1280 nm relative to movement position X. Within a range of change (from -3.5 to +3.5 mm) of movement position X, a reflectance is maximized when X is 0 mm and this position is an optimal value.

At the subsequent Step (f) 606, a state of the optical system, that is, a position of the measurement probe 141 is set to the optimal value (X=0 mm) obtained at Step (e) 605.

By a series of the steps up to this point, a state of the optical system, that is, a position of the measurement probe 141 in the X direction can be adjusted to an optimal state.

In the above-mentioned second embodiment, for a measured value measured at Step (c) 603, reflectance, which is a ratio of measured light and light energy measured with respect to reference light, is used; but a relative reflectance, that is, a value obtained by dividing light energy of measured light measured with respect to a suspension light by light energy of measured light measured in advance using a standard sample, may be used.

The above-mentioned light energy is also generally referred to as light intensity. Any other value, for example, a photon number which is a value corresponding to an amount of light or an output value, for example, a voltage value or a current value, from the detector, or the like may be used as a measured value. Or, a value computed using a measured value as a basis measured in advance with respect to these values is also acceptable.

In relation to the second embodiment, a description has been given to a case where a spectrophotometer is used as the spectroscopic device 100 but the present invention is not limited to this and, for example, a fluorescence spectrophotometer may be used.

In this case, for example, the light energy of excitation light can be used as a measured value. Further, Raman spectroscopy equipment may be used and also, in this case, the light energy of excitation light can be used as a measured value.

### Third Embodiment

Hereafter, a description will be given to another example of an optical system adjustment method of the present invention.

In relation to the present embodiment, a description will be given to a method for adjusting a position of the measurement probe 141, which can be adjusted by the rotational motion mechanism 122, to an optimal position.

A spectroscopic measurement device used in the present adjustment method is one identical in the spectroscopic measurement device, pipe, and suspension liquid described in relation to the second embodiment and it is assumed that a position of the measurement probe 141 in the X direction has been adjusted to an optimal state (X=0 mm) by the method of the second embodiment.

The order of execution of each step is as shown in FIG. 6 and is specifically as described below:

At the first Step (a) 601, a measurement condition for the spectroscopic device 100 is set as described below:

A measurement is made so as to measure an absorbance at intervals of 5 nm under conditions of a wavelength sweep range of 1700 nm to 1200 nm and a wavelength sweep speed of 1200 nm/min.

The reason why the above wavelength sweep range was selected is the same as the reason described in relation to the second embodiment.

At the subsequent Step (b) 602, a state of the optical system, that is, a position of the measurement probe 141 is shifted using the rotational motion mechanism 122. Movement position θ is set to 0°.

At the subsequent Step (c) 603, a measurement with the spectroscopic device 100 is made under the condition set at Step (a) 601 and an absorbance within a range of wavelength of 1700 nm to 1200 nm is measured as a spectrum.

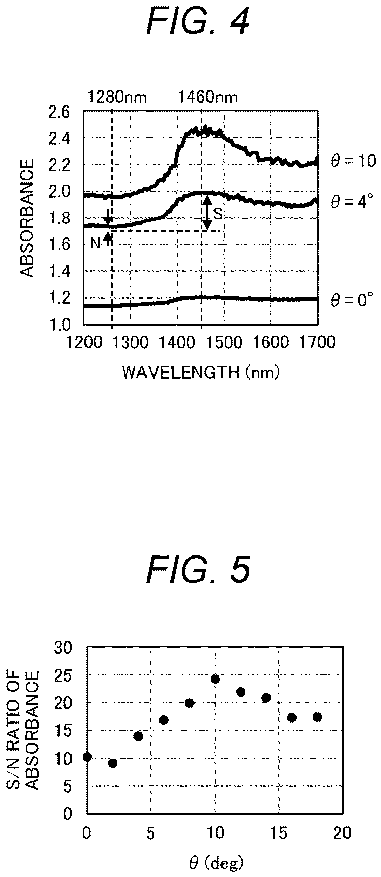

FIG. 4 shows an example of an absorbance spectra measured in movement position θ of 0°, 4°, and 10°.

How an absorbance spectrum varies depending on movement position θ can be seen. A peak observed in proximity to 1460 nm indicates a light absorbance band due to water in the suspension liquid 162.

At the subsequent Step (d) 604, of the spectra obtained at Step (c) 603, variation in absorbance in proximity to a wavelength of 1280 nm is taken as a noise component and a difference between an absorbance at 1460 nm and an absorbance at 1280 nm, that is, an effective value of light absorption by water in the suspension liquid 162 is taken as a signal component; and an S/N ratio of absorbance obtained by a calculation formula of (signal component)/(noise component) is obtained as a part of evaluation values.

However, variation in absorbance is computed by a difference between a maximum value and a minimum value with respect to five pieces before and after, 11 pieces in total of absorbance data, including data of absorbance of wavelength (1280 nm) of interest.

The reason why variation in absorbance is computed at a wavelength of 1280 nm is that it is a wavelength region where a spectrum shape is flat. When a spectrum shape is slanted or a peak top shape is formed, a maximum value and a minimum value are thereby influenced.

Subsequently, Step (a) 601 to Step (c) 603 are repeated. At this time, a measurement condition for Step (a) 601 is set as mentioned above, movement position θ of Step (b) 602 is shifted to the positive direction by 2° each time of repetition. Until movement position becomes 18°, Step (a) 601 to Step (c) 603 are repeated, a set of movement position θ and a corresponding S/N ratio is obtained as an evaluation value.

Evaluation values at the spectra shown in FIG. 4, that is, sets of movement position θ and an S/N ratio computed by the above method are (0°, 10.2), (4°, 13.9), and (10°, 24.2).

At Step (e) 605, subsequently, an optimal value is computed from the evaluation value obtained by the above steps, that is, a set of movement position θ and a corresponding S/N ratio of absorbance. FIG. 5 shows an S/N ratio of absorbance relative to movement position θ. When θ is 10°, an S/N ratio is maximized and this position is an optimal value.

At the subsequent Step (f) 606, a state of the optical system, that is, a position of the measurement probe 141 is set to the optimal value (θ=10 mm) obtained at Step (e) 605.

By a series of the steps up to this point, a state of the optical system, that is, a position of the measurement probe 141 can be adjusted to an optimal state.

By the adjustment described in relation to the present embodiment, the optical system can be adjusted to a more suitable state.

The reason for this is that by making the optical system adjustment in the second embodiment, a rotating surface of the measurement probe based on the rotational motion mechanism 122 adjusted in the third embodiment can be made agree with a flat surface embracing the central axis of the pipe 160.

When the rotating surface of the measurement probe 141 based on the rotational motion mechanism 122 is displaced from the central axis of the pipe 160, a distance by which irradiation light from measured light passes through the window material 161 and a distance by which reflected light going from the suspension liquid 162 toward the measurement probe 141 passes through the window material 161 are lengthened and a strong influence is given by light absorption by the window material 161.

By the rotating surface of the measurement probe 141 based on the rotational motion mechanism 122 agreeing with the flat surface embracing the central axis of the pipe 160, an influence of light absorption by the window material 161 can be minimized.

A suspension liquid whose component concentration is known is used as the suspension liquid 162 and a calibration curve is drawn by measuring an absorbance thereof. Thus, when a component concentration of the suspension liquid 162 is unknown, the component can be quantified.

By making the adjustment described in relation to the present embodiment, measurement accuracy of absorbance is enhanced and thus the accuracy of a calibration curve is enhanced.

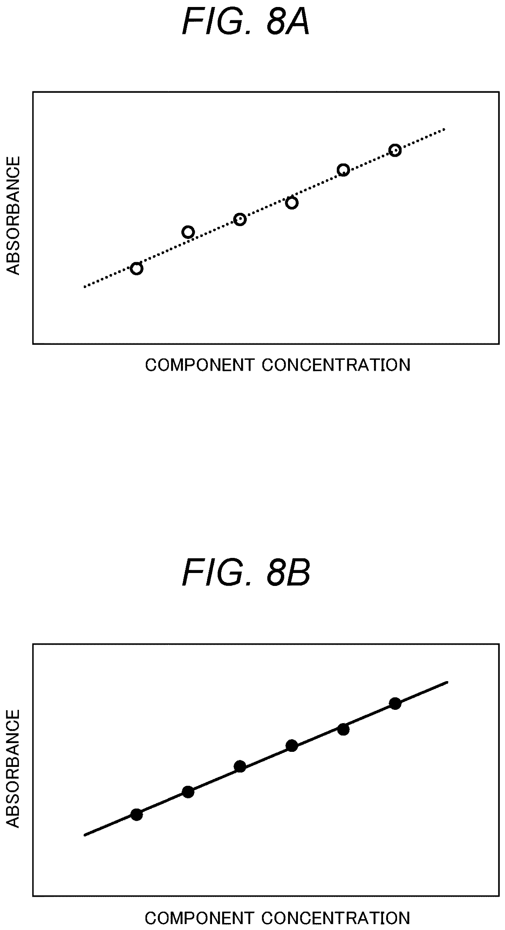

A description will be given to this with reference to drawings. The white circle points in FIG. 8A indicate a result (S/N ratio=9) obtained when an absorbance of a sample having a plurality of known components is measured with low measurement accuracy of absorbance and the dotted line indicates a calibration curve (coefficient of determination=0.835) based on measurement points.

The black circle points and solid line in FIG. 8B indicate an absorbance (S/N ratio=25) of a sample having known components and a calibration curve (coefficient of determination=0.996) obtained when measurement accuracy of absorbance has been enhanced by the method of the present invention or the like.

When a state of the optical system is adjusted to an optimal state and measurement accuracy of absorbance is enhanced, it can be seen that a coefficient of determination of a calibration curve is enhanced and calibration accuracy is enhanced.

In the present embodiment, the X direction is adjusted to an optimal position by the method in the second embodiment and then the θ direction is adjusted to an optimal position. Even when a spectroscopic measurement device is not provided with a position adjustment mechanism for the measurement probe in the X direction and a rotating surface in the θ direction substantially agrees with the central axis of the pipe, the above method is applicable.

In this case, the shape of the window material 161 need not be cylindrical and, for example, a plate-like shape is also acceptable.

### Fourth Embodiment

Hereafter, a description will be given to another example of an optical system adjustment method of the present invention.

In relation to the present embodiment, a description will be given to a method for adjusting a position of the measurement probe 141, which can be adjusted by the rotational motion mechanism 122, to an optimal position, different from the method in the third embodiment.

A spectroscopic measurement device used in the present adjustment method is one identical in the spectroscopic measurement device, pipe, and suspension liquid described in relation to the second embodiment and it is assumed that a position of the measurement probe 141 in the X direction has been adjusted to an optimal state (X=0 mm) by the method of the second embodiment.

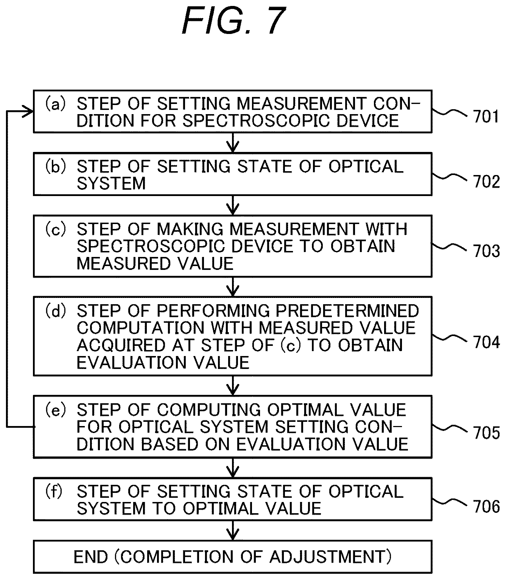

The order of execution of individual steps is as shown in FIG. 7 and is specifically as described below:

At the first Step (a) 701, a measurement condition for the spectroscopic device 100 is set as described below:

A measurement is made so as to measure an absorbance for five seconds at intervals of 0.5 seconds at wavelengths of 1280 nm and 1460 nm. That is, an absorbance is measured by 10 pieces at each wavelength.

At the subsequent Step (b) 702, a state of the optical system, that is, a position of the measurement probe 141 is shifted using the rotational motion mechanism 122. Movement position θ is set to 0°.

At the subsequent Step (c) 703, a measurement is made with the spectroscopic device 100 and a plurality of pieces of data of absorbance at a wavelength of 1280 nm and a plurality of pieces of data of absorbance at a wavelength of 1460 nm are measured. In this example, a number of a plurality of pieces of data is 10 pieces as mentioned above.

At the subsequent step (d) 704, a plurality of pieces of the data obtained at step (c) 703 is used to perform the following processing: Variation (difference between a maximum value and a minimum value with respect to 10 pieces of data) in absorbance in proximity to a wavelength of 1280 nm is taken as a noise component and a difference between an average value of absorbance at 1460 nm and an average value of absorbance at 1280 nm is taken as a signal component; and an S/N ratio of absorbance obtained by a calculation formula of (signal component)/(noise component) is obtained as a part of evaluation values.

At Step (e) 705, subsequently, when an evaluation value obtained by the above steps is equal to or higher than an evaluation value acquired in advance, movement position θ at that time is computed as an optimal value.

When an optimal value cannot be computed at Step (e) 705, Step (a) 701 to Step (e) 705 are repeated. At this time, a measurement condition for Step (a) 701 is set as mentioned above and movement position θ is shifted by 2° to the positive direction each time of repetition. Until movement position becomes 14°, Step (a) 701 to Step (e) 705 are repeated.

By a series of the steps up to this point, a number of pieces of data measured by repetition of Step (a) 701 to Step (e) 705 can be reduced as compared with the third embodiment and time required for adjustment can be shortened.

For example, when the probe jig 120 is detached from and attached again to the pipe 160, a state of the optical system, that is, a position of the measurement probe 141 can be swiftly adjusted to an optimal state.

The present invention is not limited to the above-mentioned embodiments and includes various modifications. For example, the above embodiments describe the present invention in details for making the present invention understandable and the present invention need not be provided with all the configurations described above. Part of the configuration of some embodiment can be replaced with the configuration of any other embodiment and the configuration of some embodiment can also be added to the configuration of any other embodiment. With respect to part of the configuration of each embodiment, another configuration can be added thereto, deleted therefrom, or replaced therewith.

### List of Reference Signs

100: Spectroscopic device
102: Light source
103: Spectrometer
104: Photodetector
120: Probe jig
121: Linear motion mechanism
122: Rotational motion mechanism
123: Fixing portion to pipe
141: Measurement probe
142: Irradiation optical fiber
143: Reception optical fiber
160: Pipe
161: Window material
162: Suspension liquid
163: Axial direction of pipe
164: Flange

## Claims

1. A spectroscopic measurement device, when used, attached to a pipe having a window portion through which a suspension liquid can be optically checked, comprising:
a light irradiation unit that applies light to suspension liquid in the pipe through the window portion; and
a light reception unit for receiving light emitted from the suspension liquid as the result of application of light from the light irradiation unit to the suspension liquid,
wherein a variable mechanism capable of varying at least either of an angle of light applied from the light irradiation unit to the window portion and an irradiation position thereof is provided.

2. The spectroscopic measurement device according to Claim 1,
wherein the dispositions of the light irradiation unit and the light reception unit are fixed, and the variable mechanism is a mechanism that varies both the light irradiation unit and the light reception unit with the positional relation therebetween maintained.

3. The spectroscopic measurement device according to Claim 1,
wherein a part of each of the light irradiation unit and the light reception unit is comprised of an optical fiber and a probe is formed by bundling the optical fibers.

4. The spectroscopic measurement device according to Claim 1,
wherein the variable mechanism is a mechanism that varies an irradiation position of light applied from the light irradiation unit to the window portion to a direction different from the axial direction of the pipe.

5. An adjustment method for the spectroscopic measurement device according to any of Claims 1 to 4, comprising:
varying at least either of an angle of light applied from the light irradiation unit to the window portion and an irradiation position thereof with the variable mechanism to obtain a measured value, and
determining an optimal angle and irradiation position of light based on the measured value.

6. The adjustment method for the spectroscopic measurement device according to Claim 5, further comprising:
varying a wavelength of light applied from the light irradiation unit to obtain an optimal measurement condition.

7. The adjustment method for the spectroscopic measurement device according to Claim 5,
wherein the measured value is
at least any of light energy measured at the light reception unit, a photon number, an output value, a reflectance, and an absorbance.

8. The adjustment method for the spectroscopic measurement device according to Claim 7,
wherein an optimal measurement condition is obtained based on at least any of the light energy, photon number, output value, reflectance, and absorbance.
